## Europäisches Patentamt
## European Patent Office
## Office européen des brevets

(19)

(11) Veröffentlichungsnummer: **0 012 873**
**B1**

(12)

# EUROPÄISCHE PATENTSCHRIFT

(45) Veröffentlichungstag der Patentschrift:
**12.01.83**

(51) Int. Cl.³: **A 61 C 1/16**, A 61 C 1/06

(21) Anmeldenummer: **79104779.8**

(22) Anmeldetag: **29.11.79**

(54) **Zahnärztliche Handstückanordnung.**

(30) Priorität: **22.12.78 DE 2855719**

(43) Veröffentlichungstag der Anmeldung:
**09.07.80 Patentblatt 80/14**

(45) Bekanntmachung des Hinweises auf die Patenterteilung:
**12.01.83 Patentblatt 83/2**

(84) Benannte Vertragsstaaten:
**AT CH FR GB IT SE**

(56) Entgegenhaltungen:
**DE-A-1 766 056**
**DE-A-1 938 399**
**DE-A-2 346 705**
**DE-A-2 431 472**
**DE-A-2 606 062**
**DE-B-1 566 265**
**DE-C- 689 227**
**DE-U-1 995 097**
**DE-U-7 823 758**

(73) Patentinhaber: **SIEMENS AKTIENGESELLSCHAFT**
**Berlin und München, Postfach 22 02 61,**
**D-8000 München 22 (DE)**

(72) Erfinder: **Weber, Walter, Goldregenstrasse 4,**
**D-6143 Lorsch (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Zahnärztliche Handstückanordnung

Die Erfindung bezieht sich auf eine zahnärztliche Handstückanordnung mit einem Antriebsmotor, in dem eine Triebwelle drehbar gelagert ist, an die ein Triebwellenabschnitt eines ein Kopfgehäuse zur Aufnahme eines Drehwerkzeuges aufweisendes Handstückteil ankuppelbar ist, und dessen Motorgehäuse eine mittels Halte- und/oder Rastmitteln abnehmbar, gegen ungewolltes axiales Abgleiten vom Motor jedoch gesichert, angeordnete Hülse enthält.

In der zahnärztlichen Praxis besteht an sich die Forderung, die mit den Fingern des Arztes in Berührung kommenden Teile des Antriebsmotors (in der Regel ein Elektromotor) im Bedarfsfalle desinfizieren bzw. sterilisieren zu können. Nachdem solche Antriebsmotoren an sich nicht geeignet sind, in eine Desinfizierflüssigkeit gelegt oder im Autoklaven z. B. mittels Heissdampf sterilisiert zu werden, hat man schon versucht (DE-A1-1 766 056), den Motor gegen Berührung und damit gegen Beschmutzung zu schützen, indem man das an den Antriebsmotor ankuppelbare Handstück mit dem Kopfteil nach hinten so weit verlängert, dass die Verlängerung den Antriebsmotor zumindest über den wesentlichsten Teil seiner Länge umgibt.

Nachteilig bei einer solchen Anordnung ist, dass damit das Handstück relativ lang und unhandlich ist und dass das den Antriebsmotor übergreifende Endteil, da Bestandteil des Handstückes, praktisch bei jeder Handstückausführung vorzusehen ist. Dieser Aufwand ist, nachdem eine Sterilisation oder Desinfektion des Antriebsmotors in der Praxis nicht ständig, sondern nur bei speziellen Behandlungen, z.B. bei chirurgischen Eingriffen, erforderlich ist, nicht gerechtfertigt.

Bei einer anderen bekannten Konstruktion (DE-A1-2 606 062) ist auf das Motorgehäuse eine eine Kühlmittelleitung enthaltende Hülse drehfest aufgesetzt; zum Zwecke der Sterilisation ist diese abnehmbar, gegen ungewolltes axiales Abgleiten vom Motorgehäuse jedoch gesichert, gehaltert.

Um bei Handstückanordnungen der eingangs genannten Art am Handstückmotor einen Schalt- und/oder Steuervorgang für eine im Inneren angeordnete Schalt- und/oder Steuereinrichtung auslösen zu können, wäre es in an sich bekannter Weise denkbar, aussen am Motorgehäuse ein über Durchbrechungen hindurch ins Innere führendes und mit der Schalt- und/oder Steuereinrichtung zusammenwirkendes Betätigungsglied anzuordnen. Eine solche Anordnung wäre sowohl fertigungstechnisch als auch kostenmässig relativ aufwendig; insbesondere im Hinblick darauf, dass die vorzusehenden Teile aus einem für eine Sterilisation geeignetem Material gefertigt sein müssten.

Aufgabe der vorliegenden Erfindung ist es, eine Handstückanordnung der eingangs genannten Gattung dahingehend zu verbessern, dass einerseits die mit der Hand des Benutzers in Berührung kommenden Teile des Antriebsmotors leicht desinfizierbar bzw. sterilisierbar sind, und dass anderseits eine Möglichkeit geschaffen ist, unter Vermeidung einer aufwendigen Konstruktion und von aus dem Motorgehäuse vorstehenden, in der Handhabung störenden Teilen, am Antriebsmotor einen Schalt- und/oder Steuervorgang auslösen zu können.

Die gestellte Aufgabe wird bei einer zahnärztlichen Handstückanordnung der eingangs genannten Art gemäss der Erfindung dadurch gelöst, dass die Halte- und/oder Rastmittel so ausgebildet sind, dass die Motorhülse um eine in oder parallel zur Antriebsachse des Motors verlaufende Achse drehbar ist, und dass die Motorhülse mit einem Mitnehmerelement zur Betätigung einer Schalt- und/oder Steuereinrichtung gekuppelt ist.

Wesentliche Vorzüge der erfindungsgemässen Lösung sind, dass keine zusätzlichen und aus dem Motorgehäuse vorstehenden Teile vorhanden sind und dass die Hülse an dem Teil lösbar befestigt ist, der in der Praxis in der Regel nur einmal vorhanden ist, dem Antriebsmotor, im Gegensatz zu den Handstückteilen, von denen der Arzt mehrere Sätze mit unterschiedlichen Unter- und Übersetzungsgetrieben im Gebrauch hat. Der Teil des Antriebsmotors, der mit den Händen bzw. Fingern des Arztes in Berührung kommt, kann also bei Bedarf leicht desinfiziert oder sterilisiert werden, ohne dass dazu die Handstückteile unnötigerweise verlängert zu werden brauchen, wie dies bei der einen bekannten Konstruktion der Fall ist.

Besonders vorteilhaft ist es, wenn die Hülse zur Betätigung einer im Inneren des Motors angeordneten Drehzahlbereichsumschaltvorrichtung vorgesehen ist.

Weitere vorteilhafte Ausgestaltungen und Weiterbildungen der Erfindung sind in den Unteransprüchen enthalten.

Ein Ausführungsbeispiel der Erfindung wird nachstehend anhand der Zeichnung näher erläutert. Es zeigen:

Fig. 1 eine zahnärztliche Handstückanordnung mit aufgesetztem Kopfteil in schaubildlicher Darstellung,

Fig. 2 einen Teil der in Fig. 1 dargestellten Handstückanordnung im Längsschnitt entlang der Linie II/II in Fig. 4,

Fig. 3 einen weiteren Teil der in Fig. 1 dargestellten Handstückanordnung im Längsschnitt,

Fig. 4 einen Querschnitt entlang der Linie IV/IV in Fig. 2.

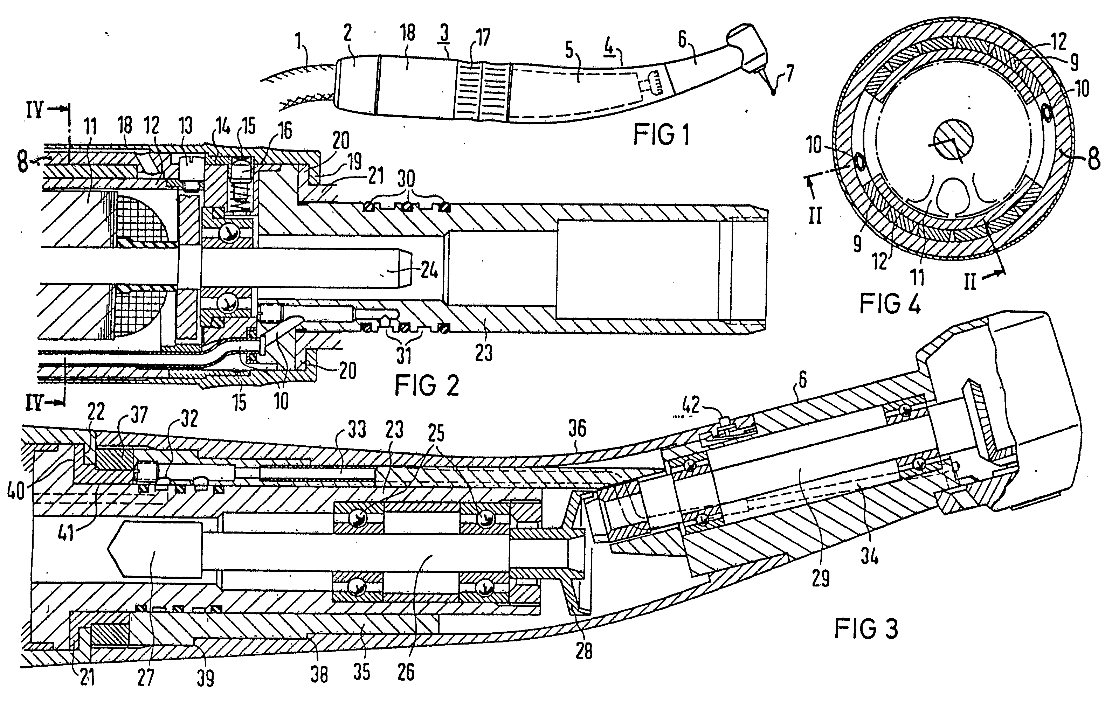

Die Fig. 1 zeigt in einer schaubildlichen Darstellung eine zahnärztliche Handstückanordnung mit einem an einem Versorgungsschlauch 1 über eine Anschlussarmatur 2 angeschlossenen Antriebsmotor 3 (Elektrokleinstmotor), an den sich ein mit 4 bezeichnetes Handstück anschliesst. Das Handstück 4 besteht im wesentlichen aus einem antriebsseitigen Handstückteil 5 und einem werkzeugseitigen Handstückteil 6 (Kopfteil), welches ein nicht näher bezeichnetes Kopfgehäuse enthält, in dem ein Werkzeug 7 drehbar gelagert ist.

Aus der Fig. 2 geht der Aufbau des Antriebsmotors 3 und Teile des sich unmittelbar daran anschliessenden antriebsseitigen Handstückteils 5 hervor. Im Motorgehäuse 8 sind, wie auch aus der Fig. 4 näher zu ersehen ist, beidseitig halbschalenförmige Statorteile 9 aus permanentmagnetischem Material sowie zwischen den Statorteilen beidseitig angeordnete Kühlmittelleitungen 10 vorhanden. Zwischen dem Rotor 11 und den Statorteilen 9 sind zwei Rückschlusssegmente 12 um 90° verdrehbar angeordnet; die Rückschlusssegmente 12 dienen zur Beeinflussung des Magnetflusses und damit zur Beeinflussung der Drehzahl des Motors, wie nachfolgend kurz erläutert wird:

In der in Fig. 4 gezeichneten Stellung sind die Rückschlusssegmente 12 gleich gross den Segmenten der beiden Permanentmagnethalbschalen 9. In dieser Stellung ist der Luftspalt zwischen Stator und Rotor relativ klein, so dass der Anker vom gesamten Magnetfluss durchflutet wird. In einer um 90° gedrehten Stellung der Rückschlusssegmente 12 ist zwischen Rotor 11 und Permanentmagnet 9 ein relativ grosser Luftspalt und damit ein grosser magnetischer Widerstand vorhanden; ausserdem wird ein Teil des Magnetflusses über die beiden Abschnitte der Rückschlusssegmente 12 kurzgeschlossen. Der Magnetfluss im Anker ist dadurch im Vergleich zu der gezeichneten Anfangsstellung nach Fig. 4 kleiner und nach der Beziehung $n \sim 1/\varnothing$ die Drehzahl des Antriebsmotors entsprechend höher. Durch Drehen der Rückschlusssegmente 12 kann somit der Drehzahlbereich verändert werden.

Die Betätigung der beiden Rückschlusssegmente 12 erfolgt über einen Mitnehmerstift 13, der in einer Hülse 14 geführt ist. Die Hülse 14 enthält eine Ringnut mit Einkerbungen 15, in die zwei im Motorgehäuse 8 um 180° versetzt angeordnete federbelastete Raststifte 16 eingreifen. Die Führungshülse 14 ist mit einer eine Riffelung 17 aufweisenden äusseren, das Motorgehäuse 8 übergreifenden Motorhülse 18 fest verbunden, wodurch bei Drehen der Motorhülse 18 über den Mitnehmerstift 13 eine Verdrehung der Rückschlusssegmente 12 erreicht wird.

Die äussere Motorhülse 18 weist ein nach innen gerichtetes abgewinkeltes Ende 19 auf, das einen Flansch 20 einer Flanschhülse 21 mit einem geringen Lagerspiel 22 umgreift. Mit 23 ist ein die Motorwelle 24 umgebender und zum Handstück hin verlängerter Führungsschaft bezeichnet, in dem über Lager 25 ein Triebwellenabschnitt 26 gelagert ist (Fig. 3), der einerseits über eine Klauenkupplung 27 eine Verbindung mit der Antriebswelle 24 und anderseits über ein Doppelzahnrad 28 eine Verbindung mit einem mit 29 bezeichneten Triebwellenabschnitt des werkzeugseitigen Handstückteils 6 herstellt; der Führungsschaft 23 enthält ferner zwei durch O-Ringe 30 gegeneinander abgedichtete Ringnuten 31, in die die motorseitigen Kühlmittelleitungsabschnitte 10 münden. Die Ringnuten 31 korrespondieren mit zwei radialen Kanälen 32 (in der Darstellung nur der eine zu erkennen), welche mit zum Kopfgehäuse führenden Kühlmittelleitungsabschnitten 33 und 34 verbunden sind. Der Kühlmittelleitungsabschnitt 33 ist in einer weiteren Hülse 35 angeordnet, die auf einer am werkzeugseitigen Handstückteil 6 befestigten Handstückhülse 36 fest angeordnet ist. Die Ringnuten 31 und Kanäle 32 bilden zusammen mit den O-Ring-Dichtungen 30 eine Drehkupplung für die Medienübergabe.

Die Hülse 35 liegt mit ihrer einen Stirnseite an einem Gewindering 37 an, der auf der Flanschhülse 21 aufgepresst ist. Auf den Gewindering 37 ist die mit dem werkzeugseitigen Handstückteil 6 (Kopfteil) fest verbundene äussere Handstückhülse 36 aufgeschraubt. Durch das Aufschrauben der Handstückhülse 36 auf den Gewindering 37 wird über zwei Absätze 38, 39 eine Fixierung der Teile in axialer Richtung erzielt. Das werkzeugseitige Handstückteil (Kopfteil) 6 mit der Handstückhülse 36 kann zusammen mit der Hülse 35, dem Gewindering 37 und der Flanschhülse 21 um den Führungsschaft 23 gedreht werden, wozu an den mit 40 und 41 angegebenen Stellen ein weiteres Lagerspiel vorhanden ist. Das zwischen dem Hülsenendteil 19 und der Flanschhülse 21 vorhandene Lagerspiel (22) gewährleistet, dass die Motorhülse 18 gegenüber der Anschlussarmatur 2 (Fig.1) einerseits und, wie bereits erwähnt, dass das Kopfteil 6 mit der Handstückhülse 36 gegenüber dem Motorgehäuse 8 anderseits gedreht werden kann.

Das werkzeugseitige Handstückteil 6 ist mittels einer mit 42 angedeuteten Blattfederrastung betriebsmässig lösbar mit der Hülse 36 verbunden. Zum Abnehmen der Hülse 36 vom Antriebsgehäuse wird zunächst das werkzeugseitige Handstückteil 6 von der Hülse 36 gelöst. Die Leerhülse 36 kann sodann zusammen mit der Motorhülse 18 axial abgezogen werden, wobei hierzu lediglich die axiale Haltekraft der Rastung 15, 16 überwunden zu werden braucht. Nach Abziehen der Hülse 36 kann diese dann getrennt oder zusammen mit dem Kopfteil 6 sterilisiert werden.

**Patentansprüche**

1. Zahnärztliche Handstückanordnung mit einem Antriebsmotor (3), in dem eine Triebwelle (24) drehbar gelagert ist, an die ein Triebwellenabschnitt (26) eines ein Kopfgehäuse zur Aufnahme eines Drehwerkzeuges (7) aufweisendes Handstückteil (4) ankuppelbar ist, und dessen Motorgehäuse eine mittels Halte- (21, 37) und/oder Rastmitteln (15, 16) abnehmbar, gegen ungewolltes axiales Abgleiten vom Motor jedoch gesichert, angeordnete Hülse (18) enthält, dadurch gekennzeichnet, dass die Halte- und/oder Rastmittel (21, 37, 15, 16) so ausgebildet sind, dass die Motorhülse (18) um eine in oder parallel zur Antriebsachse des Motors verlaufende Achse drehbar ist und dass die Motorhülse (18) mit einem Mitnehmerelement (13) zur Betätigung einer Schalt- und/oder Steuereinrichtung (12) gekuppelt ist.

2. Handstückanordnung nach Anspruch 1, dadurch gekennzeichnet, dass das handstückseitige Ende (19) der Hülse (18) so ausgebildet ist, dass an ihm der das Kopfgehäuse enthaltende Handstückteil (6, 36) drehbar gehalten werden kann, die Verbindung nach axialem Abziehen beider Teile vom Antriebsmotor (3) jedoch wieder lösbar ist.

3. Handstückanordnung nach einem der Ansprüche 1 oder 2, dadurch gekennzeichnet, dass die Motorhülse (18) mittels einer im Motorgehäuse (8) angeordneten Rasteinrichtung (15, 16) in wenigstens zwei definierten Stellungen gegenüber dem Motorgehäuse feststellbar und nach Entriegeln der Rasteinrichtung axial vom Motorgehäuse abnehmbar angeordnet ist.

4. Handstückanordnung nach Anspruch 3, dadurch gekennzeichnet, dass die Motorhülse (18) ein abgewinkeltes Endteil (19) enthält, das formschlüssig in Eingriff kommt mit Flanschteilen (20, 21), an denen eine das Kopfteil (6) aufnehmende Handstückhülse (36) befestigbar ist, wobei die Verbindungsglieder (19 bis 21) so ausgebildet sind, dass beide Hülsen (18, 36) sowohl gegeneinander als auch miteinander gegenüber dem Motorgehäuse (8) verdreht werden können.

5. Handstückanordnung nach Anspruch 4, dadurch gekennzeichnet, dass das Kopfteil (6) mit der Handstückhülse (36) betriebsmässig, d.h. ohne Zuhilfenahme von Werkzeugen, lösbar verbunden ist.

6. Handstückanordnung nach Anspruch 4, dadurch gekennzeichnet, dass das abgewinkelte Ende (19) der Motorhülse (18) den Flansch (20) einer Flanschhülse (21) unter Bildung eines Lagerspiels (22) umgreift, dass die Flanschhülse (21) sowohl mit einem stirnseitigen (40) als auch mit einem peripheren Lagerspiel (41) am einen Führungsschaft (23) des Antriebsmotors (3) gehaltert ist und dass auf der Flanschhülse (21) oder an einem daran befestigten Teil (37) die Handstückhülse (36) lösbar befestigt ist.

7. Handstückanordnung nach einem der Ansprüche 4 bis 6, dadurch gekennzeichnet, dass die im Motorgehäuse (8) angeordnete Rasteinrichtung (15, 16) gleichsam zur Rastung der Handstückhülse (36) vorgesehen ist.

8. Handstückanordnung nach einem der Ansprüche 1 bis 7, dadurch gekennzeichnet, dass als Rasteinrichtung wenigstens ein federbelasteter Rastbolzen (16) vorgesehen ist, der in eine am Umfang einer konzentrisch zur Motorachse angeordneten und mit der Motorhülse (18) fest verbundenen Mitnehmerhülse (14) angeordnete Ausnehmung (15) einrastet.

9. Handstückanordnung nach einem der Ansprüche 2 bis 8, unter Verwendung eines Elektrogleichstrommotors mit permanentmagnetischer Erregung als Antrieb, dadurch gekennzeichnet, dass mit der Motorhülse (18) ein zwischen Stator (9) und Rotor (11) des Antriebsmotors (3) angeordnetes, den Magnetfluss und damit die Drehzahl des Antriebsmotors veränderndes Stellglied (12) gekuppelt ist.

10. Handstückanordnung nach einem der Ansprüche 6 bis 9, dadurch gekennzeichnet, dass der Führungsschaft (23) über die Motorwelle (24) hinaus verlängert ist und als eine den Triebwellenabschnitt (26) des antriebsseitigen Handstückteils (5) aufnehmende Hülse ausgebildet ist, die den einen Teil einer aus einer konzentrischen Ringnut (31) und eines mit dieser korrespondierenden und axial oder radial in diese mündenden Zu- oder Ableitungskanal (32) gebildeten Drehkupplung aufnimmt, deren anderer Teil (32) von einer fest mit der Handstückhülse (36) verbundenen weiteren Hülse (35) aufgenommen ist.

## Claims

1. A dental hand tool arrangement having a drive motor (3) in which a drive shaft (24) is rotatably mounted to which can be coupled a drive shaft section (26) of a part (4) of a hand tool which has a head casing to receive a rotary tool (7), and the motor housing of which includes a sleeve (18) which is arranged so as to be removable by means of holding means (21, 37) and/or locking means (15, 16) and secured against unintentional axial sliding-off from the motor, characterised in that the holding means and/or locking means (21, 37, 15, 16), are so designed that the motor sleeve (18) is rotatable about an axis which runs coaxially with or parallel to the drive axis of the motor, and that the motor sleeve (18) is coupled to a driving element (13) which serves to actuate a switching and/or control device (12).

2. A hand tool arrangement according to Claim 1, characterised in that the end (19) of the sleeve (18) adjacent to the hand tool is so designed that the part (6, 36) of the hand tool which contains the head casing can be rotatably supported thereon, but that the connection can again be broken when the two have been axially pulled away from the drive motor (3).

3. A hand tool arrangement according to one of Claims 1 or 2, characterised in that the motor sleeve (18) can be fixed in at least two definite positions relative to the motor housing by means of a locking device (15, 16) which is arranged in the motor housing (8), so as to be axially removable from the motor housing after the release of the locking device.

4. A hand tool arrangement according to Claim 3, characterised in that the motor sleeve (18) includes an angled end part (19) which engages in formlocking manner with flanged parts (20, 21) to which a hand tool sleeve (36) receiving the head part (6) can be attached, the connecting elements (19 to 21) being so designed that the two sleeves (18, 36) can be rotated both relative to one another and also one with the other relative to the motor housing (8).

5. A hand tool arrangement according to Claim 4, characterised in that the head part (6) is detachably connected to the hand tool sleeve (36) operationally i.e. without the aid of tools.

6. A hand tool arrangement according to Claim 4, characterised in that the angled end (19) of the motor sleeve (18) embraces the flange (20) of a flanged sleeve (21) so as to produce a bearing play (22); that the flanged sleeve (21) is mounted on a guide shaft (23) of the drive motor (3) both with an end bearing play (40) and with a peripheral bearing play (41); and that the hand tool sleeve (36) is detachably secured to the flanged sleeve (21) or to a component (37) attached thereto.

7. A hand tool arrangement according to one of Claims 4 to 6, characterised in that the locking device (15, 16) arranged in the motor housing (8) serves as it were for the locking of the hand tool sleeve (36).

8. A hand tool arrangement according to one of Claims 1 to 7, characterised in that the locking device consists of at least one spring-loaded locking bolt (16) which engages in a recess (15) which is arranged at the periphery of a driving sleeve (14) which is arranged concentrically to the motor axis and is fixedly connected to the motor sleeve (18).

9. A hand tool arrangement according to one of Claims 2 to 8, using as drive means, a d.c. electric motor having permanent magnet energisation, characterised in that the motor sleeve (18) is coupled to a control element (12) which is located between the stator (9) and rotor (11) of the drive motor (3) and which modifies the magnetic flux and therefore the speed of the drive motor.

10. A hand tool arrangement according to one of Claims 6 to 9, characterised in that the guide shaft (23) extends beyond the motor shaft (24) and is formed as a sleeve which accommodates the drive shaft section (26) of the drive-end hand tool part (5), and which accommodates one component of a rotary coupling which component consists of a concentric annular groove (31) and a supply or discharge channel (32) which corresponds with the latter and opens axially or radially into it, the other component (32) of said rotary coupling being accommodated in a further sleeve (35) which is fixedly connected to the hand tool sleeve (36).

**Revendications**

1. Agencement de pièce à main de dentisterie à moteur d'entraînement (3) dans lequel est monté à rotation un arbre d'entraînement (24) auquel est susceptible d'être accouplée une section d'arbre d'entraînement (26) d'un élément de pièce à main comportant un boîtier de tête pour recevoir un outil tournant (6), et dont le carter de moteur comprend une douille (18) détachable à l'aide de moyens de maintien (21, 37) et/ou d'encliquetage (15, 16) et disposée de façon à toutefois être assurée contre un glissement de dégagement fortuit du moteur, caractérisé par le fait que les moyens de maintien et/ou d'encliquetage (21, 37, 15, 16) sont réalisés de telle manière que la douille de moteur (18) est susceptible de tourner dans l'axe ou parallèlement à l'axe d'entraînement du moteur et que la douille de moteur (18) est accouplée à un élément d'entraînement (13) pour actionner un dispositif de commutation et/ou de commande (12).

2. Agencement de pièce à main selon la revendication 1, caractérisé par le fait que l'extrémité (19) située du côté de la pièce à main de la douille (18) est réalisée de telle façon que l'on puisse monter, à rotation, l'élément de pièce à main (6, 36) contenant le boîtier de tête, la liaison étant toutefois détachable du moteur d'entraînement (3), après dégagement axial des deux éléments.

3. Agencement de pièce à main selon l'une des revendications 1 ou 2, caractérisé par le fait que la douille de moteur (18) peut être fixée, à l'aide d'un dispositif d'encliquetage (15, 16) disposé dans le carter du moteur (8), dans au moins deux positions déterminées par rapport au carter du moteur, et elle est disposée de façon à pouvoir être dégagée axialement du carter du moteur, après déverrouillage du dispositif d'encliquetage.

4. Agencement de pièce à main selon la revendication 3, caractérisé par le fait que la douille du moteur (18) comporte une partie terminale coudée (19) qui peut venir en prise par formes complémentaires avec des éléments à flasques (20, 21) à l'un desquels est susceptible d'être fixée la douille de pièce à main (36) qui reçoit la pièce de tête (6), les éléments de liaison (19 à 21) étant réalisés de telle façon que les deux douilles (18, 36) peuvent subir une rotation tant l'une par rapport à l'autre que toutes deux par rapport au carter du moteur (8).

5. Agencement de pièce à main selon la revendication 4, caractérisé par le fait que l'élément de tête (6) est fixé, de façon détachable, à la douille de pièce à main (36), en fonctionnement, c'est-à-dire sans faire appel à des outils.

6. Agencement de pièce à main selon la revendication 4, caractérisé par le fait que l'extrémité coudée (19) de la douille du moteur (18) entoure le flasque d'une douille à flasque (21), avec formation d'un jeu de montage (22), que la douille à flasque (21) est montée sur une tige de guidage (23) du moteur d'entraînement (3), aussi bien avec un jeu de montage (40) situé du côté frontal d'un jeu de montage périphérique (41), et que sur la douille à flasque (21) ou à un élément (37) qui y est fixé, est fixée, de façon détachable, la douille de pièce à main (36).

7. Agencement de pièce à main selon l'une des revendications 4 à 6, caractérisé par le fait que le dispositif à encliquetage (15, 16) disposé dans le carter du moteur (8), est également prévu pour l'encliquetage de la douille de pièce à main (36).

8. Agencement de pièce à main selon l'une des revendications 1 à 7, caractérisé par le fait que l'on prévoit comme dispositif d'encliquetage au moins une cheville d'encliquetage (16) chargée par un ressort, et qui s'enclenche dans une cavité (15) prévue à la périphérie d'une douille d'entraînement (14) qui est disposée concentriquement à l'axe du moteur et qui est solidaire de la douille du moteur (18).

9. Agencement de pièce à main selon l'une des revendications 2 à 8, avec mise en œuvre d'un moteur électrique à courant continu et à excitation à aimantation permanente, caractérisé par le fait qu'à la douille du moteur (18) est accouplé un organe de réglage (12) qui est disposé entre le stator (9) et le moteur (11) du moteur d'entraînement (3) et qui modifie le flux magnétique et par voie de conséquence la vitesse de rotation du moteur d'entraînement.

10. Agencement de pièce à main selon l'une des revendications 6 à 9, caractérisé par le fait que la tige de guidage (23) est prolongée au-delà de l'arbre du moteur (24) et est réalisée sous la forme d'une douille recevant la section d'arbre d'entraînement (26) de l'élément de pièce à main (5) situé du côté de l'entraînement, douille qui reçoit l'une des parties d'un accouplement à rotation, constituée par une gorge annulaire concentrique (31) et par un canal d'alimentation ou d'évacuation (32) qui correspond avec ladite gorge annulaire et qui y débouche axialement ou radialement, et dont l'autre partie (32) est reçue par une autre douille (35) reliée de façon fixe à la douille de pièce à main (36).

0 012 873

FIG 1

FIG 2

FIG 3

FIG 4